# EUROPEAN PATENT APPLICATION

(11) **EP 1 408 419 A2**
(43) Date of publication of application: **14.04.2004**
(21) Application number: 03255024.6
(22) Date of filing: 13.08.2003
(51) Int. Cl.: G06F 15/78

(54) **Digital signal processor system**

(30) Priority: 30.09.2002 JP 2002286839
(71) Applicant: FUJITSU TEN LIMITED, Kobe-shi, Hyogo (JP)
(72) Inventor: Nakaishi, Shinichi c/o Fujitsu Ten Limited, Kobe-shi Hyogo (JP)
(74) Representative: Skone James, Robert Edmund

(57) **Abstract**

A digital signal processor system, for example, an FIR filter, enabling a reduction of the memory capacity of a ROM storing various programs, provided with an input digital signal processor arranged at an input side, an output digital signal processor arranged at an output side, and an intermediate digital signal processor interposed between the input digital signal processor and output digital signal processor connected in cascade, the digital signal processors storing inherent programs P1, P2, and P3 and an identical common program Pc shared by these digital signal processors.

## Description

The present invention relates to a digital signal processor (DSP) system, more particularly a digital signal processor system suitable for use for a digital filter built into an audio player etc.

### 2. Description of the Related Technology

A digital signal processor system is for example used for a digital filter built into an audio player.

In the past, to realize the important low pass filter and high pass filter functions of an audio player by digital filtering, in almost all cases an infinite impulse response (IIR) type digital filter was used so as to enable the circuit size to be reduced as much as possible.

In recent years, however, reduction of the circuit size has become easier due to the faster speeds and higher degrees of integration of semiconductor devices. Therefore, finite impulse response (FIR) type digital filters, which had not been utilized in the past due to the circuit inevitably becoming larger in size, have started to be looked at. Audio players mounting such FIR type digital filters (hereinafter referred to as "FIR filters") have started appearing on the market (For example, see Japanese Unexamined Patent Publication (Kokai) No. 8-79879).

In practice, however, when realizing an FIR filter by a digital signal processor, the size of the FIR filter is limited to the extent configurable by a single digital signal processor chip. To avoid an increase in cost or greater complexity of the program design, therefore, the precision is deliberately lowered and the number of taps of the FIR filter is reduced. That is, the required filter functions are obtained by a single digital signal processor chip by reducing the number of taps.

Summarizing the problems to be solved by the invention, the audio players now on the market are becoming increasingly sophisticated in functions. Recently, audio players designed based on the "time domain theory" are appearing. Audio players of this design stress not only the frequency characteristics, but also the time characteristics to enable high fidelity playback on the time axis.

For this, high precision FIR filters realizing phase linearity have become essential. For realizing such FIR filters, single digital signal processor chip is not enough. Therefore, several digital signal processor chips become necessary.

Normally, when operating a digital filter comprised of digital signal processors, the programs for driving the digital signal processors are supplied from the microprocessor in the audio player. This microprocessor is provided with its associated read only memory (ROM) loaded with the various required programs in advance.

This being the case, since a large size ROM is required even for driving a single digital signal processor, if driving two or three or more digital signal processors, there is the problem that a considerably large ROM becomes necessary.

An object of the present invention is to provide a digital signal processor system minimizing the programs for driving digital signal processors and therefore enabling a reduction of the ROM size.

To attain the above object, there is provided a digital signal processor system provided with an input digital signal processor (2) arranged at an input side, an output digital signal processor (4) arranged at an output side, and an intermediate digital signal processor (3) interposed between the input digital signal processor (2) and the output digital signal processor (4) connected in cascade, the digital signal processors storing inherent programs P1, P2, and P3 and an identical common program Pc shared by these digital signal processors.

These and other objects and features of the present invention will become clearer from the following description of the preferred embodiments given with reference to the attached drawings, wherein:
FIG. 1 is a view of the basic configuration of a digital signal processor system according to the present invention;
FIG. 2 is a schematic view of an audio player to which the present invention may be applied;
FIG. 3 is a view of an FIR filter unit in a PRE stage in FIG. 2;
FIG. 4 is a block diagram showing a digital signal processor system 1 (FIR filter) of FIG. 3 in more detail;
FIG. 5 is a view of various programs used for driving the digital signal processors in FIG. 4;
FIG. 6 is a view of a typical example of the configuration of a general FIR filter;
FIG. 7 is a view of the layout of programs for driving digital signal processors loaded in a ROM 6;
FIG. 8 and FIG. 9 are views of the configuration of the connections for communications between the digital signal processors and a microprocessor;
FIG. 10 and FIG. 11 are parts of a flow chart of an example of operation in FIG. 8; and
FIG. 12 and FIG. 13 are parts of a flow chart of an example of operation in FIG. 9.

Preferred embodiments of the present invention will be described in detail below while referring to the attached figures.

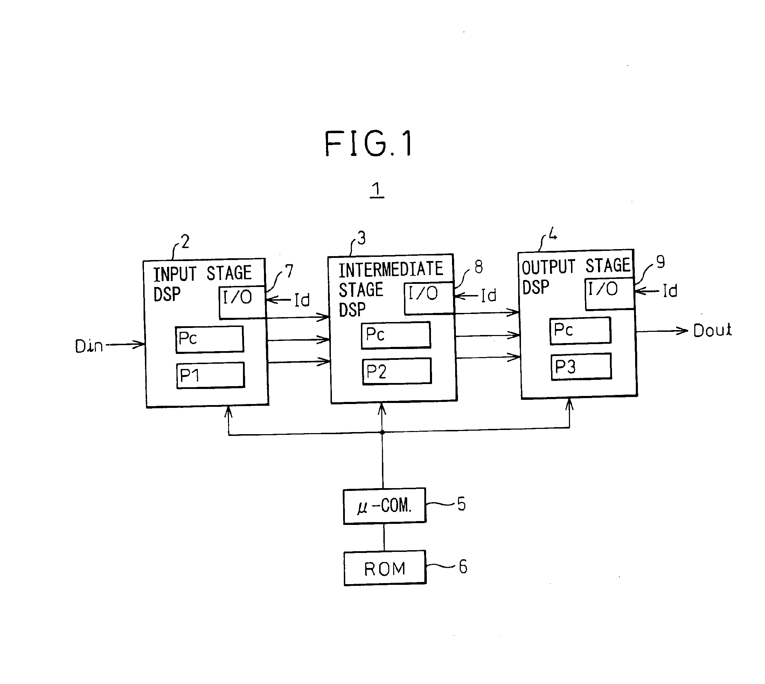

FIG. 1 is a view of the basic configuration of a digital signal processor system according to the present invention.

In the figure, reference numeral 1 indicates a digital signal processor system comprised of at least three blocks (2, 3, and 4), that is, an input digital signal processor 2 arranged at an input side (Din) of data to be processed, an output digital signal processor 4 arranged at an output side (Dout) of processed data, and at least one intermediate digital signal processor 3 interposed between the input digital signal processor 2 and the output digital signal processor 4. The input digital signal processor 2, the intermediate digital signal processor 3, and the output digital signal processor 4 are connected in cascade in that order.

Here, the input digital signal processor 2, the intermediate digital signal processor 3, and the output digital signal processor 4 store their inherent programs (P1, P2, and P3) and an identical common program Pc shared by the digital signal processors.

More particularly, the inherent programs (P1, P2, and P3) are programs for input of data and output of data in the input digital signal processor 2, the intermediate digital signal processor 3, and the output digital signal processor 4, while the common program Pc is a program for arithmetic/logic processing of the data at each of the input digital signal processor 2, the intermediate digital signal processor 3, and the output digital signal processor 4.

The digital signal processor system 1 of this configuration, preferably an FIR filter, fundamentally differs from the audio signal processor system disclosed in Japanese Unexamined Patent Publication (Kokai) No. 8-79879 providing FIR filters for respective frequency bandwidths.

The digital signal processor system 1 shown in FIG. 1 further is provided with a microprocessor 5. The microprocessor 5 transfers the common program Pc and all the inherent programs (P1, P2, and P3) in its associated ROM to the input digital signal processor 2, the intermediate digital signal processor 3, and the output digital signal processor 4. The input digital signal processor 2, the intermediate digital signal processor 3, and the output digital signal processor 4 are driven by the common program Pc and the inherent programs (P1, P2, and P3) selected corresponding to the same.

More specifically, the input digital signal processor 2, the intermediate digital signal processor 3, and the output digital signal processor 4 are provided with respective I/O units (7, 8, and 9). The inherent programs (P1, P2, and P3) corresponding to the digital signal processors are autonomously selected based on identification information Id set for the I/O units from the outside.

In this case, it is possible to set the above identification information Id for the I/O units depending on a level of voltage supplied through outside hardware or possible to set the identification information for the I/O units by software from the microprocessor 5.

Preferably, the input digital signal processor 2, the intermediate digital signal processor 3, and the output digital signal processor 4 are provided with respective identification registers for holding the set identification information Id.

In a preferred example of a digital signal processor system 1 according to the present invention, the input digital signal processor 2, the intermediate digital signal processor 3, and the output digital signal processor 4 form an FIR type digital filter for performing filtering which corresponds to the aforementioned arithmetic/logic processing. This FIR type digital filter will be explained in detail below.

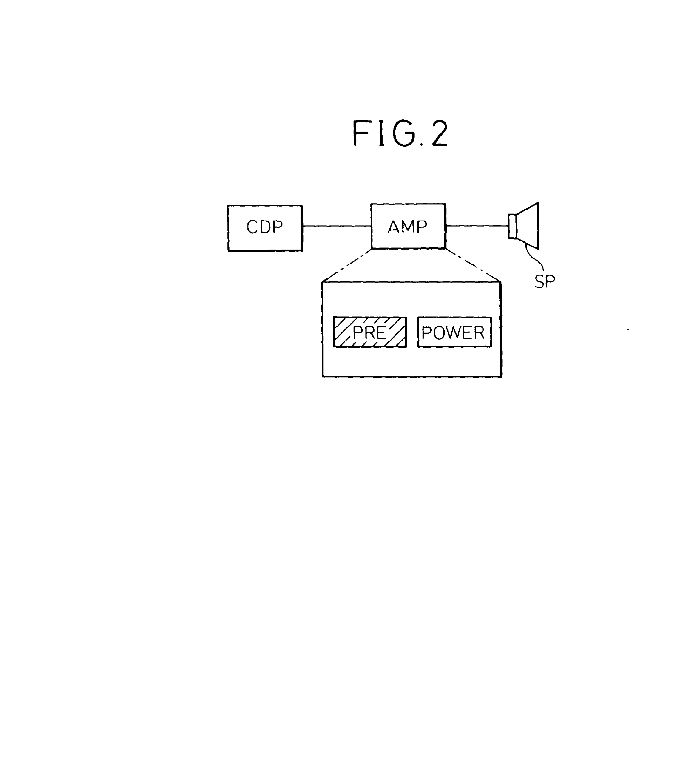

FIG. 2 is a schematic view of an audio player to which the present invention may be applied.

The example of this figure shows a configuration for amplifying the output from a CD player (CDP) by an amplifier (AMP) and outputting the result to a speaker (SP).

Explaining the amplifier (AMP) in this configuration a little more in detail, it is comprised of a PRE stage and a POWER stage. Among these, the present invention is applied to the PRE stage. The PRE stage includes an FIR filter.

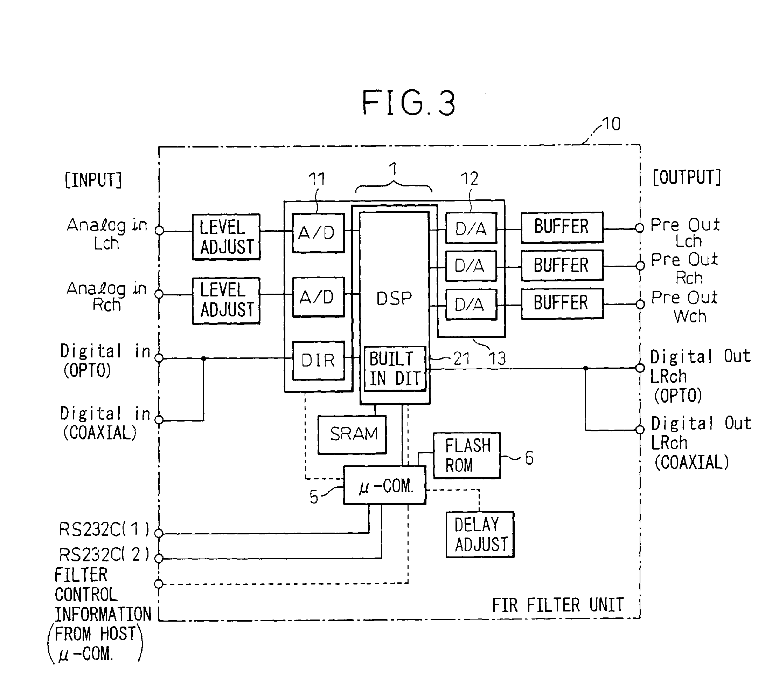

FIG. 3 is a view of an FIR filter unit in the PRE stage in FIG. 2. Note that throughout the drawings, similar components are assigned the same reference numerals or symbols.

In FIG. 3, reference numeral 10 indicates an FIR filter unit. The [INPUT] side corresponds to the CDP side in FIG. 2, while the [OUTPUT] side corresponds to the POWER stage side of FIG. 2. Further, the components already explained in FIG. 1 are the digital signal processor system 1, the microprocessor 5, and the ROM 6 comprised of for example a flash memory. The input side of the digital signal processor system 1 is provided with an analog/digital converter (A/D) 11, while the output side is provided with a digital/analog converter (D/A) 12. These converters 11 and 12 and a digital interface receiver (DIR) constitute a codec 13. The digital interface receiver communicates with a built-in digital interface transmitter (DIT).

Next, turning to the main part of the present invention, the main part of the present invention is the FIR filter (digital signal processor system 1) shown in FIG. 3.

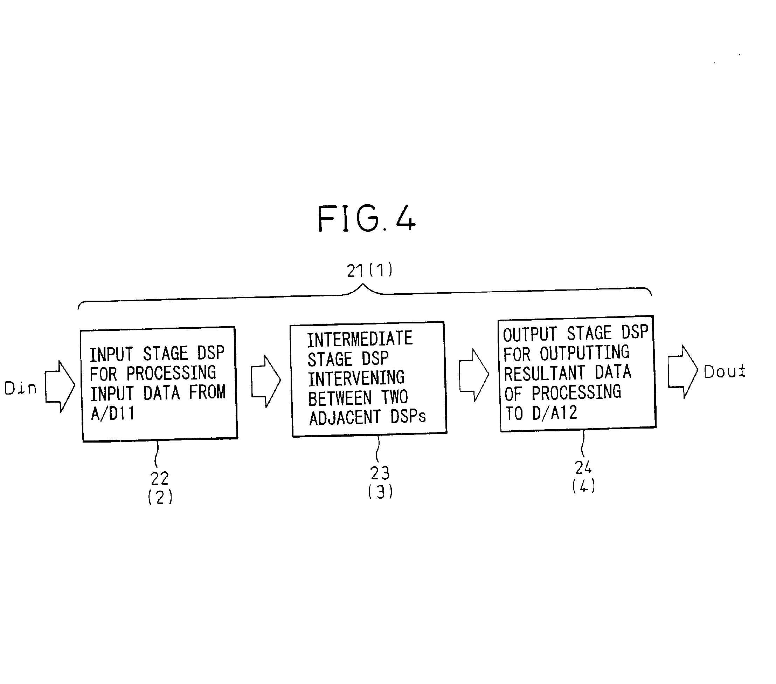

FIG. 4 is a block diagram showing the digital signal processor system 1 (FIR filter) of FIG. 3 in more detail.

In the figure, reference numeral 21 indicates an FIR filter comprised of an input digital signal processor 22, at least one intermediate digital signal processor 23, and an output digital signal processor 24. These digital signal processors correspond to the digital signal processors 2, 3, and 4 shown in FIG. 1. Further, these digital signal processors 22, 23, and 24 are driven by the programs explained below.

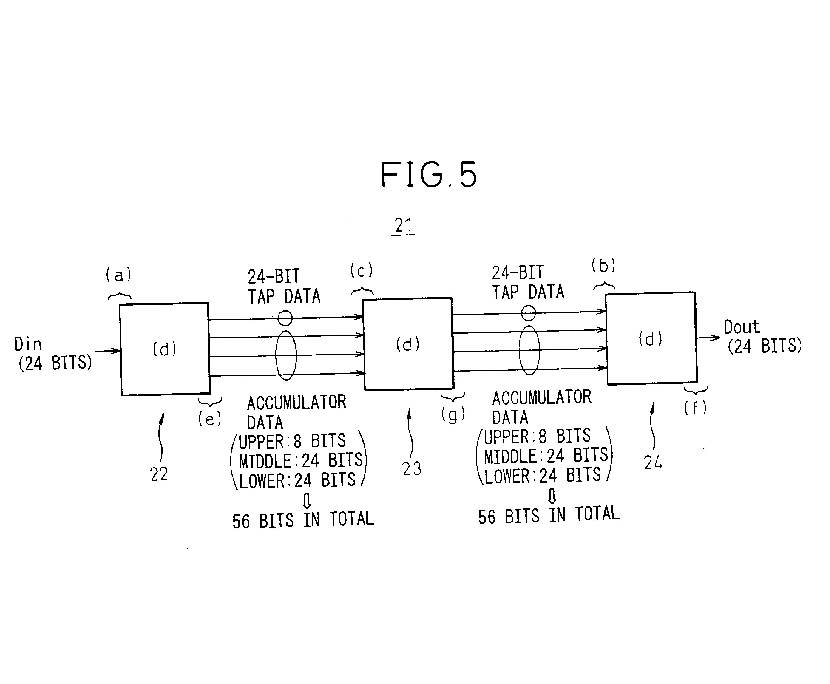

FIG. 5 is a view of the programs used for driving the digital signal processors in FIG. 4.

In the figure, the three digital signal processors 22, 23, and 24 forming the FIR filter 21 require the following programs (a) to (g):
(a) Inherent program (P1) used by the input digital signal processor 22 for the input data Din (input processing),
(b) Inherent program (P3) used by the output digital signal processor 24 for the input data Din (input processing),
(c) Inherent program (P2) used by the intermediate digital signal processor 23 for the input data Din (input processing),
(d) Common program (Pc) used in common by all digital signal processors for performing arithmetic and logic processing of the input data,
(e) Inherent program (P1) used by the input digital signal processor 22 for the output data Dout (output processing),
(f) Inherent program (P3) used by the output digital signal processor 24 for the output data Dout (output processing), and
(g) Inherent program (P2) used by the intermediate digital signal processor 23 for the output data Dout (output processing).

Summarizing the above, the "relationship between the digital signal processors and the required programs" is as follows:
Digital signal processor 22... (a)+(d)+(e)
Digital signal processor 24... (b)+(d)+(f)
Digital signal processor 23... (c)+(d)+(g)

Here, looking at the common program (d) (same as above Pc) among these programs, the common program (d) is a program for the arithmetic and logic processing at the FIR filter 21, that is, filtering.

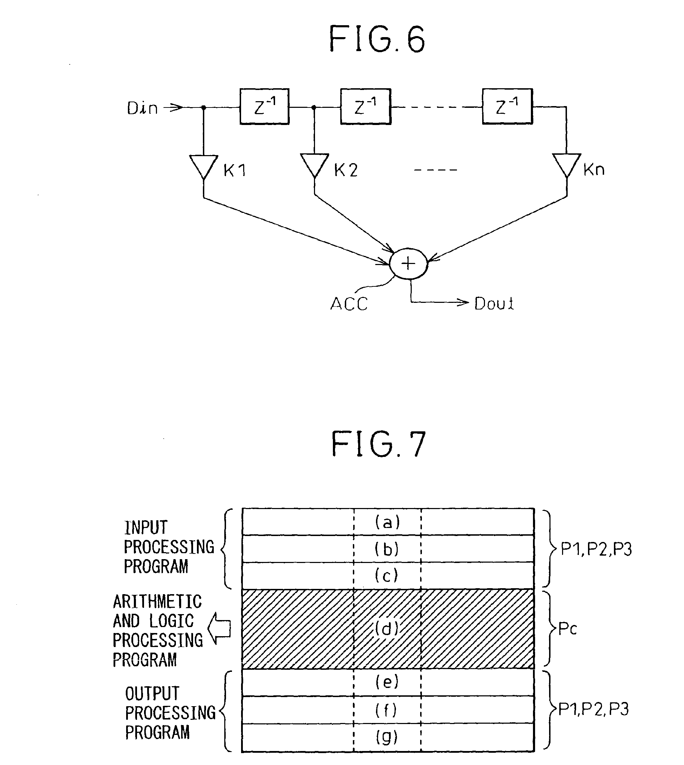

FIG. 6 is a view of a typical example of the configuration of a general FIR filter. As will be understood from this figure, this FIR filter performs convolution (multiplying and accumulating) processing. This processing requires a considerable size of program and therefore requires a corresponding number of digital signal processors. Note that Z⁻¹ indicates the unit delay, K1, K2... Kn indicate filter coefficients, and ACC indicates an accumulator.

This being the case, the total amount of the programs shown in the above "relationship between the digital signal processors and required programs" becomes enormous. Consequently, the required size of the ROM 6 for storing the same also becomes considerably great. Thus, reduction of this becomes important. This is the object of the present invention.

Here, the programs for driving the digital signal processors, stored in the ROM 6, are laid out as follows.

FIG. 7 is a view of the layout of the programs for driving digital signal processors loaded in the ROM. The group of programs comprised as shown in the figure are transferred from the microprocessor 5 of FIG. 3 to all of the digital signal processors 22, 23, and 24 and stored therein. When starting up the digital signal processors, the digital signal processor 22 selects the programs (a), (d), and (e), the digital signal processor 24 selects the programs (b), (d), and (f), and the digital signal processor 23 selects the programs (c), (d), and (g). These are used for driving them. In this case, it is preferable that the digital signal processors (22, 23, and 24) select the programs autonomously. An example of the configuration for this will be explained below.

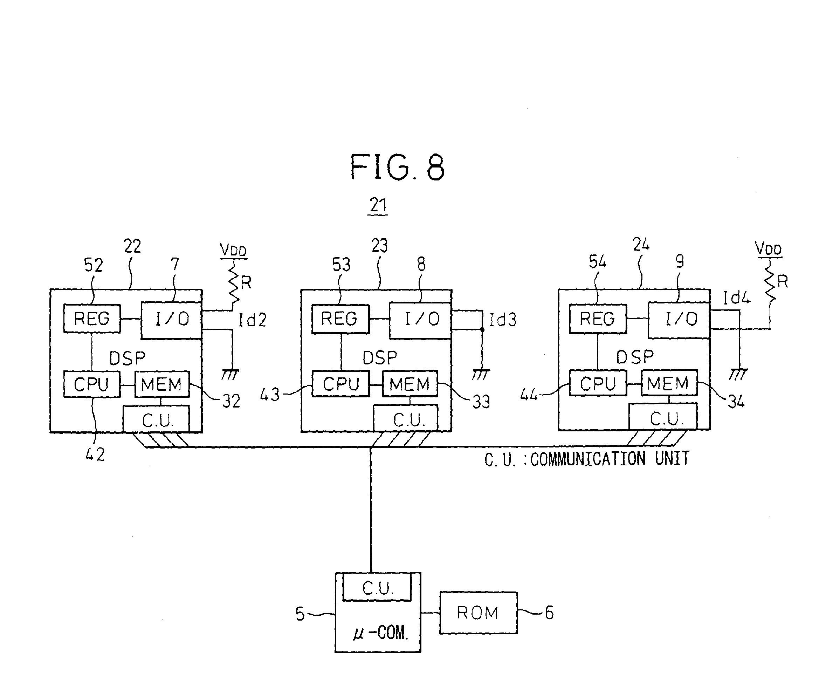

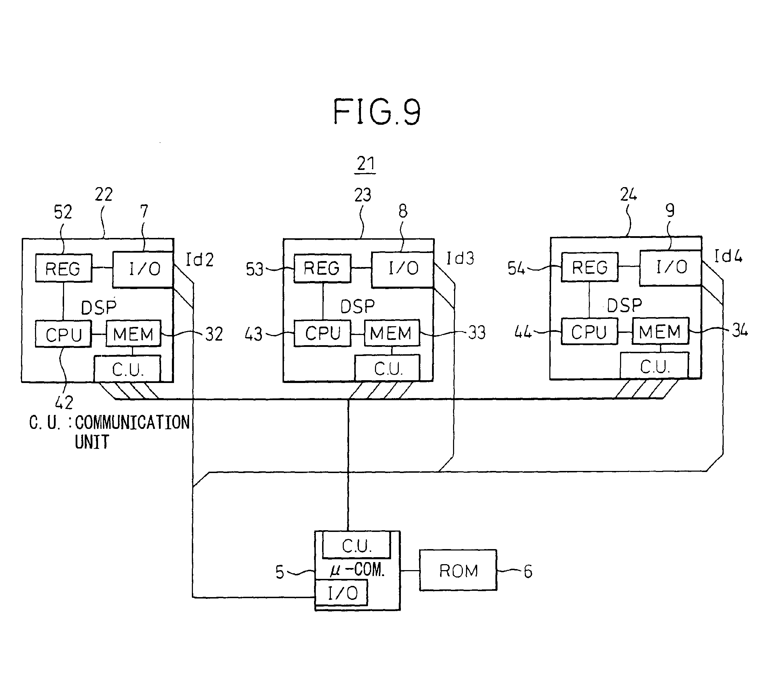

FIG. 8 and FIG. 9 are views of the configuration of connections for communication between the digital signal processors and the microprocessor. Note that illustration of the lines for transfer of data is omitted.

First, referring to FIG. 8, the group of programs (FIG. 7) transferred from the microprocessor 5 is stored in the memories (MEM) 32, 33, and 34 of the digital signal processors 22, 23, and 24.

The central processing units (CPUs) 42, 43, and 44 in the digital signal processors 22, 23, and 24 select the corresponding programs (for example, in the case of the digital signal processor 22, as mentioned above, (a), (d), and (e)) from the group of programs stored in the memories (MEM) and start their processing. Which programs to select at this time is determined by the identification information Id2, Id3, and Id4 set at respective I/O units (I/O ports) 7, 8, and 9. In this figure, for example, it is determined by the voltage levels of the 5V VDD and ground. That is, it is determined by external hardware. Note that R is a pull-up resistor. According to this example,
Id2 = (1,0)
Id3 = (0,0)
Id4 = (0,1) The digital signal processor 22 autonomously selects the programs (a)+(d)+(e) since (1,0), the digital signal processor 23 selects the programs (c)+(d)+(g) since (0,0), and the digital signal processor 24 selects the programs (b)+(d)+(f) since (0.1).

In this case, to facilitate reading of the identification information (Id2, Id3, and Id4) by the central processing units 42, 43, and 44, these are preferably provided with identification registers (REG) 52, 53, and 54 and the identification information held therein.

On the other hand, referring to FIG. 9, in this example of the configuration, the identification information Id2, Id3, and Id4 are set from the microprocessor 5 by software through respective I/O units (I/O ports) 7, 8, and 9. The specific operations will be explained below.

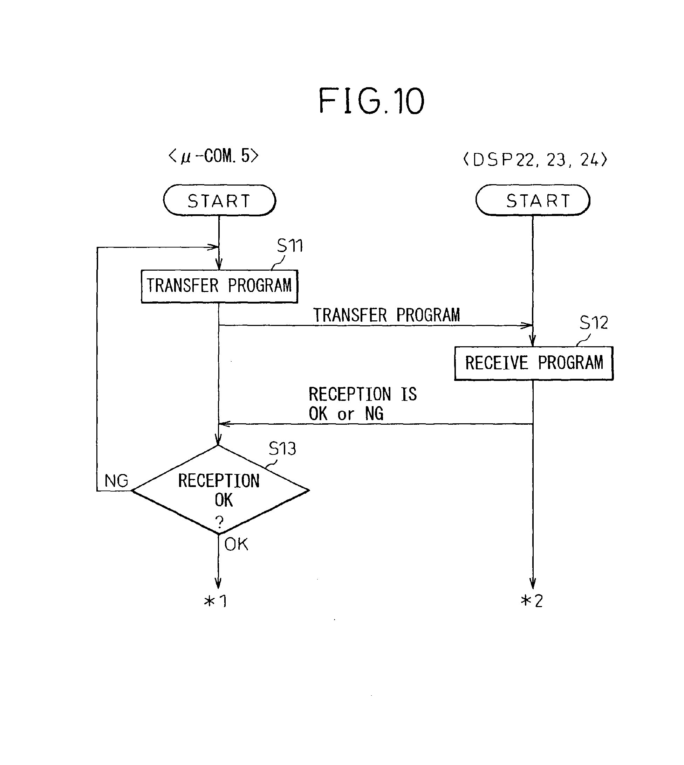

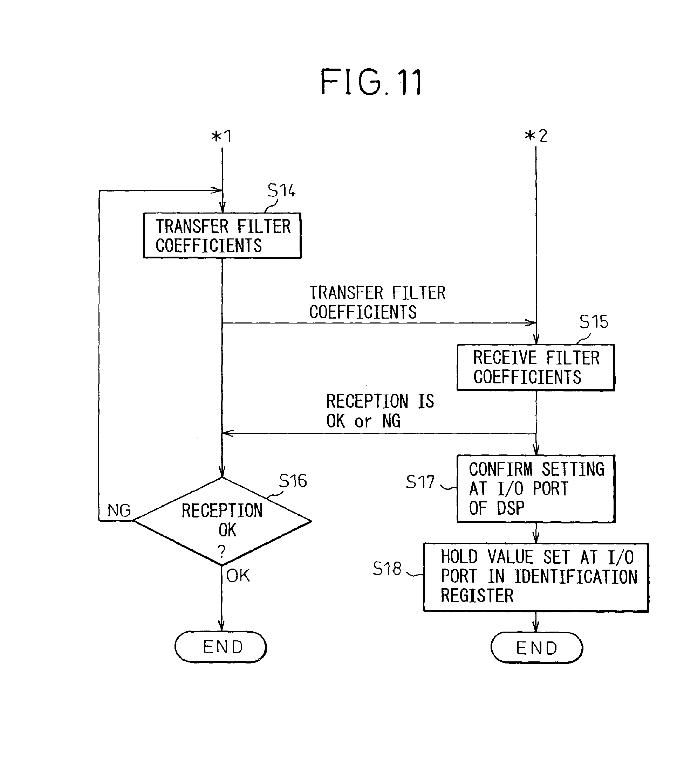

FIG. 10 and FIG. 11 are parts of a flow chart of an example of operation in FIG. 8; and FIG. 12 and FIG. 13 are parts of a flow chart of an example of operation in FIG. 9.

First, referring to FIG. 10, the steps are as follows:

Step 11: The microprocessor 5 transfers the programs of FIG. 7.

Step 12: The digital signal processor 22 receives the transferred programs.

Step 13: The digital signal processor 22 checks that the programs are normally received. If yes, the routine proceeds to step S14.

Step 14: The microprocessor 5 transfers the required filter coefficients to the digital signal processor 22. This filter coefficients, referring for example to FIG. 3, are given to the microprocessor 5 as filter control information shown at the bottom left in that figure. For example, when the cut-off frequency is changed by user settings, the filter coefficients are changed accordingly.

Step 15: The digital signal processor 22 receives the filter coefficients from the microprocessor 5, then returns an OK/NG response to the microprocessor 5.

Step 16: If the response is OK, the microprocessor 5 ends the processing, while if the response is NG, it reexecutes the processing of step S14.

Step 17: The digital signal processor 22 normally receiving the filter coefficients at step S15 checks the identification information Id2 set at the I/O unit (I/O port) 7 of the digital signal processor 22.

Step 18: The digital signal processor 22 places the identification information in its identification register (REG) 52.

After this, the digital signal processor 22 is ready to start its inherent filtering in accordance with the programs (a)+(d)+(e) corresponding to it.

On the other hand, after ending the processing by receiving the OK response at step S16, the microprocessor 5 repeats exactly the same steps as the above (S11 to S18) for the next digital signal processor 23. When it finishes this, it finally repeats exactly the same steps for the digital signal processor 24.

Due to this, the digital signal processor 22, the digital signal processor 23, and the digital signal processor 24 become ready to start operating, whereupon the filtering inherent to the FIR filter 21 commences.

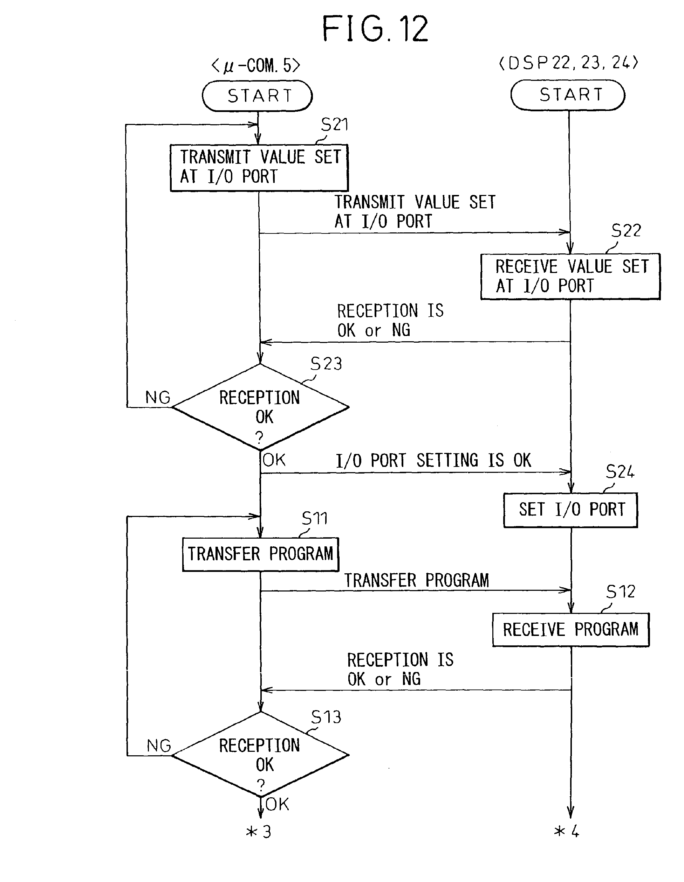

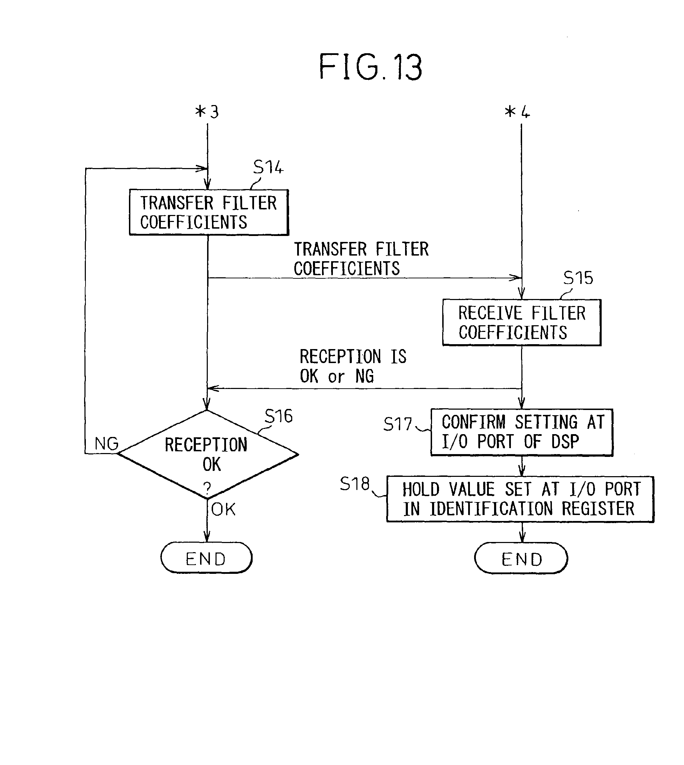

Next, referring to FIG. 12 and FIG. 13, an operation similar to the operation in FIG. 10 and FIG. 11 is performed. In FIG. 12 and FIG. 13, however, the identification information is set based on the software shown in FIG. 9.

Step 21: The microprocessor 5 transmits the content of the setting for the I/O port, that is, the identification information Id2 designated for the digital signal processor 22.

Step 22: The digital signal processor 22 returns an OK or NG response to the microprocessor 5 indicating whether the identification information has been normally received at the I/O unit 7.

Step 23: If the microprocessor 5 receives an OK response, the routine proceeds to step S24, while if the microprocessor 5 receives an NG response, it reexecutes the processing of step S21.

Step 24: The identification information Id2 for the digital signal processor 22 is set in the I/O port.

Next, a similar series of steps as with steps S11 to S18 of FIG. 10 and FIG. 11 is executed for the digital signal processor 22. Further, this is successively repeated for the digital signal processor 23 and the digital signal processor 24 as well.

As explained above, according to the present invention, it is possible to greatly reduce the memory space used for storing programs when constructing an FIR filter from three or more digital signal processors.

## Claims

1. A digital signal processor system comprised of:
an input digital signal processor arranged at an input side of data to be processed,
an output digital signal processor arranged at an output side of processed data, and
at least one intermediate digital signal processor interposed between said input digital signal processor and said output digital signal processor;
said input digital signal processor, said intermediate digital signal processor, and said output digital signal processor being connected in cascade in that order;
each of said input digital signal processor, said intermediate digital signal processor, and said output digital signal processor storing their inherent programs and an identical common program shared by the digital signal processors.

2. A digital signal processor system as set forth in claim 1, wherein said inherent programs are programs for data input and data output in said input digital signal processor, said intermediate digital signal processor, and said output digital signal processor, and said common program is a program for arithmetic/logic processing of the data at each of the input digital signal processor, the intermediate digital signal processor, and the output digital signal processor.

3. A system according to claim 1 or claim 2,
further comprising a microprocessor, wherein said common program and all said inherent programs being transferred from said microprocessor to said input digital signal processor, said intermediate digital signal processor, and said output digital signal processor, and thereby the input digital signal processor, the intermediate digital signal processor, and the output digital signal processor are driven by said common program and said inherent programs selected corresponding to the same.

4. A system according to any of the preceding claims,
wherein said input digital signal processor, said intermediate digital signal processor, and said output digital signal processor are provided with respective I/O units and said inherent programs corresponding to the digital signal processors are autonomously selected based on identification information set for said I/O units from the outside.

5. A digital signal processor system as set forth in claim 4, wherein said identification information is set for said I/O units depending on a level of voltage supplied through outside hardware.

6. A system according to claim 3 and claim 4, wherein said identification information is set for said I/O units by software from said microprocessor.

7. A system according to any of claims 4 to 6,
wherein said input digital signal processor, said intermediate digital signal processor, and said output digital signal processor are provided with respective identification registers holding said set identification information.

8. A system according to any of the preceding claims,
wherein said input digital signal processor, said intermediate digital signal processor, and said output digital signal processor form an FIR type digital filter for performing filter operation which corresponds to said arithmetic and logic processing.
